# EUROPEAN PATENT SPECIFICATION

(11) **EP 0 448 279 B1**
(45) Date of publication and mention of the grant of the patent: **11.12.1996**
(21) Application number: 91302115.0
(22) Date of filing: 13.03.1991
(51) Int. Cl.: G11B 27/10, G11B 15/00, G11B 19/28

(54) **Control system for reproduction devices**
Steuerungssystem für Wiedergabevorrichtungen
Système de commande pour dispositifs de reproduction

(30) Priority: 16.03.1990 JP 66314/90
(43) Date of publication of application: 25.09.1991
(60) Divisional application: 95202184.8
(73) Proprietor: SONY CORPORATION, Tokyo 141 (JP)
(72) Inventor: Suzuki, Shogo, c/o Patents Division, Shinagawa-ku, Tokyo 141 (JP); Morishima, Shinichi, c/o Patents Division, Shinagawa-ku, Tokyo 141 (JP)
(74) Representative: Robinson, Nigel Alexander Julian

(56) References cited:
- EP-A- 0 191 473
- EP-A- 0 394 008
- FR-A- 2 632 800
- GB-A- 2 060 203
- US-A- 4 210 939
- US-A- 4 382 268
- US-A- 4 722 966
- FERNSEH UND KINO TECHNIK vol. 42, no. 10 , October 1988 , BERLIN DE pages 471 - 482 U.FROEHLICH 'VERKOPPLUNGS UND SYNCHRONISATIONSTECHNIK'

## Description

The invention relates to controllers and control systems in general and to controllers and control systems for controlling reproduction devices such as video tape recorders (VTRs) in particular.

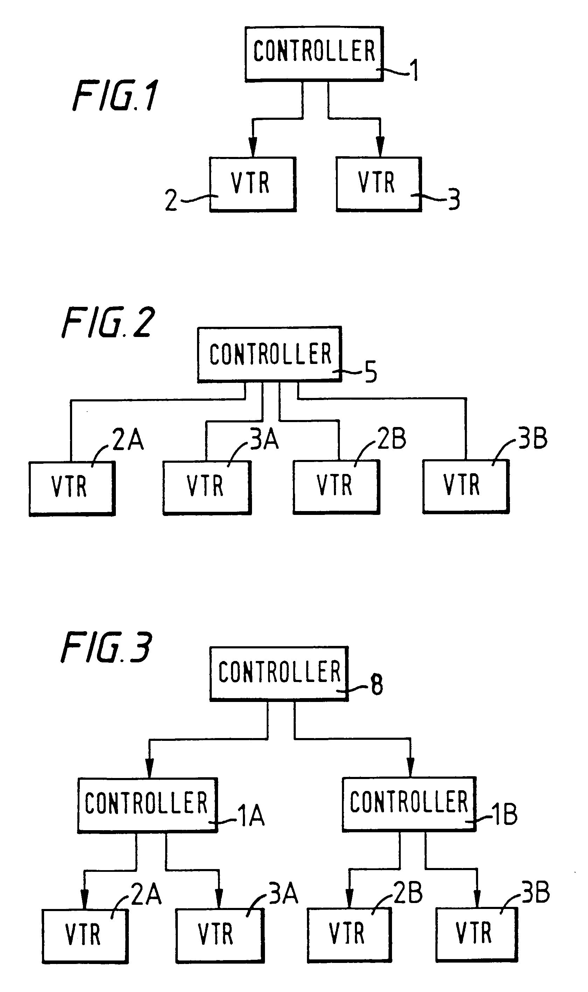

Fig. 1 is a schematic block diagram of a controller 1 for controlling two video tape recorders (VTRs) 2 and 3 concurrently. The VTRs 2 and 3 are each connected to the controller 1 so as to enable input and output of video signals and operational commands to permit operations such as editing and the like to be performed.

It is desired that more than two VTRs be connected in this manner, then this causes difficulties. The video tape recorders (VTR) 2 and 3 are each connected to the controller 1 for inputting and outputting video signals and operational commands for enabling operations such as editing or the like.

Conceivably four video tape recorders 2A, 2B, 3A, 3B could be used concurrently for editing and the like if a single controller 5 were capable of controlling the video tape recorders 2B and 3B as well as the video tape recorders 2A and 3A, as illustrated schematically in Fig. 2. However, such an arrangement where many video tape recorders 2A to 3B are connected to a common controller would mean that the construction of the controller 5 would become complicated.

Alternatively, it is conceivable that the video tape recorders 2B and 3B could be connected to an additional controller 1B, and that controllers 1A and 1B could be controlled separately by a host controller 8 as illustrated schematically in Fig. 3. However, this leads to the need for the extra host controller 8.

There are additional problems associated with conventional controllers and control systems. A conventional controller such as that illustrated in Fig. 1 is able to control the pair of VTRs 2 and 3 in synchronism with each other such that information can be reproduced therefrom in a normal reproduction mode. In other words, the controller can reproduce information from the VTRs 2 and 3 at speeds sychronized with each other in normal reproduction mode. With a VTR set in a predetermined control mode, control data is provided from the controller to the VTR to switch its operating mode and, at the same time the control data is output to the other VTR. In this way, the VTRs can be set in a normal reproduction mode. In this mode, the video tape recorders are operated with a predetermined reference signal taken as a reference so that they reproduce information in a synchronized manner.

EP-A-0 191 473 describes a technique for synchronizing tape recording and playback machines, in which one of the machines is designated as a master device to control the other (slave) machines. US-A-4 210 939 discloses techniques using timecode signals to synchronize a pair of VTRs.

With the conventional controller, the operations of a plurality of the VTRs can be synchronized to output synchronized reproduction signals in the normal reproduction mode.

A problem arises where it is desired to synchronize the reproduction of information from a plurality of video tape recorders at variable speeds, as for example would be desirable for a relay station, for example, for broadcasting a baseball game.

The technique used as the normal reproduction mode is not suitable for synchronizing the reproduction of information from a plurality of video tape recorders at variable speeds due to small discrepancies in reproduction speed and differences in rise-time and fall-time characteristics between the video tape recorders.

A solution is also sought to the problems associated with selecting a desired reproduction speed.

An object of a first aspect of the invention is to provide a controller and a control system for controlling a plurality of controlled objects in an efficient and cost effective manner.

In accordance with a first aspect of the invention, therefore, there is provided a controller for controlling at least one reproduction apparatus, wherein:
the controller is connectable to at least one further controller to define a control system, which further controller is for controlling at least one further reproduction apparatus;
the controller and the further controller are each selectively operable in a master mode or in a slave mode; and
the controller is operable in the master mode to control the reproduction apparatus and to control, via the further controller, the further reproduction apparatus and is operable in the slave mode to permit the reproduction apparatus to be controlled by the further controller when the further controller is in the master mode;
said controller comprising:
master mode request means;
means for responding to activation of the master mode request means to issue master mode request data to means for connecting the controller to the further controller;
means for sensing whether master mode acknowledgement data indicative of a further controller already in the master mode is received from the connection means within a predetermined period, the sensing means maintaining the controller in the slave mode if the master mode acknowledgement data is received within the period and switching the controller to the master mode otherwise.

Although the invention is particularly adapted to the control of reproducing devices such as video tape recorders, it is not limited thereto. Accordingly, there is also provided a control system for controlling a plurality of apparatus, said control system comprising a plurality of controllers and connection means for interconnecting the controllers wherein:
each controller is connected to at least one apparatus for controlling said apparatus;
each controller is selectively operable in a master mode or in a slave mode with at most one controller being operable in the master mode at any time; and
an apparatus connected to a controller operating in the slave mode is controllable by a controller operating in the master mode;
each said controller comprising:
master mode request means;
means for responding to activation of the master mode request means to issue master mode request data to means for connecting the controller to the other controllers;
means for sensing whether master mode acknowledgement data indicative of a further controller already in the master mode is received from the connection means within a predetermined period, the sensing means maintaining the controller in the slave mode if the master mode acknowledgement data is received within the period and switching the controller to the master mode otherwise.

Preferred embodiments of the invention are described hereinafter with reference to the accompanying drawings in which:
Fig. 1 is a schematic diagram of a prior art controller for controlling two video tape recorders;
Figs. 2 and 3 are schematic block diagrams of conceivable control systems;
Fig. 4 is a schematic block diagram of a control system in accordance with the invention;
Figs. 5 and 6 are flow diagrams illustrating control logic incorporated in controllers in the control system of Fig. 4;
Figs. 7, 8 and 9 are state diagrams for illustrating operations of the control system of Fig. 4;
Fig. 10 is a schematic block diagram of elements one example of a controller for the control system of Fig. 4;
Fig. 11 is a schematic block diagram of elements of a second example of a controller;
Fig. 12 is a flow chart showing the principle of operation of the controller of Fig. 11;
Fig. 13 is a schematic illustration of part of a control panel for a proposal for a controller;
Fig. 14 is a schematic block diagram of elements of the controller of Fig. 13;
Fig. 15 is a schematic block diagram of elements of an example of a controller in accordance with the invention;
Fig. 16 is an illustration of part of a control panel of the controller of Fig. 15;
Fig. 17 is used in explaining the initialisation of a variable-speed dial of the controller of Fig. 15; and
Fig. 18 is an illustration of elements of a control panel in accordance with the invention.

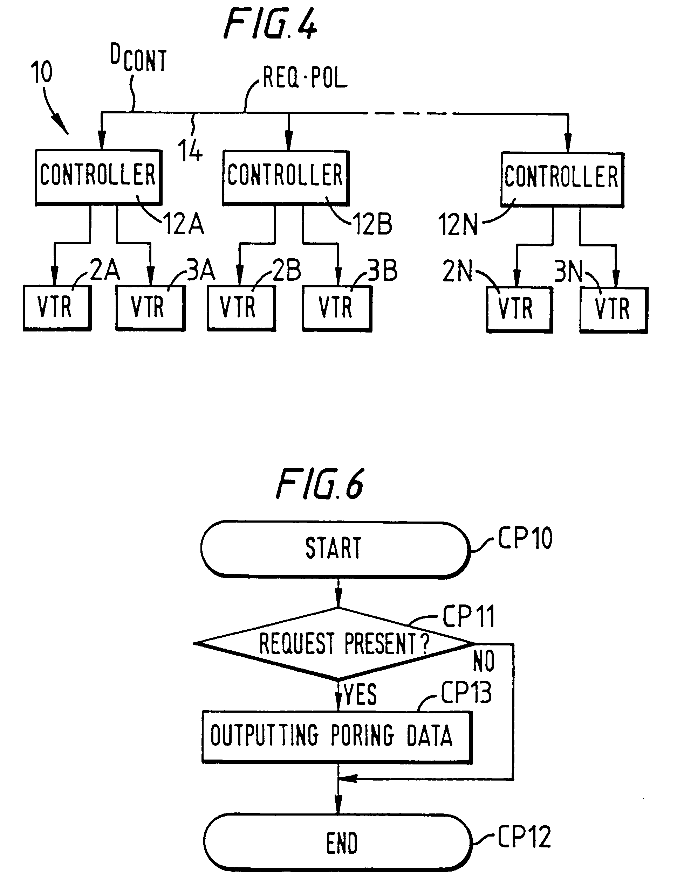

Fig. 4 is a schematic block diagram of an editing system 10 in accordance with the invention which includes a plurality of controllers 12A, 12B, 12C, ... ..., 12N with a pair of video tape recorders 2A and 3A, 2B and 3B, 2C and 3C, ... ..., 2N and 3N connected respectively to each controller, the controllers being connected by a bus in the form of a general purpose interface bus (GP-IB) 14. Each of the controllers can operate either in a master mode or in a slave mode.

In a slave mode, the controllers 12A to 12N can change the operation of the video tape recorders 2A to 2N connected to the controllers 12A to 12N according to control data D_{CONT} input via the bus 14, and also change the operation of the video tape recorders 2A to 3N connected to the controllers 12A to 12N in accordance with the individual operation of each of the controllers 12A to 12N.

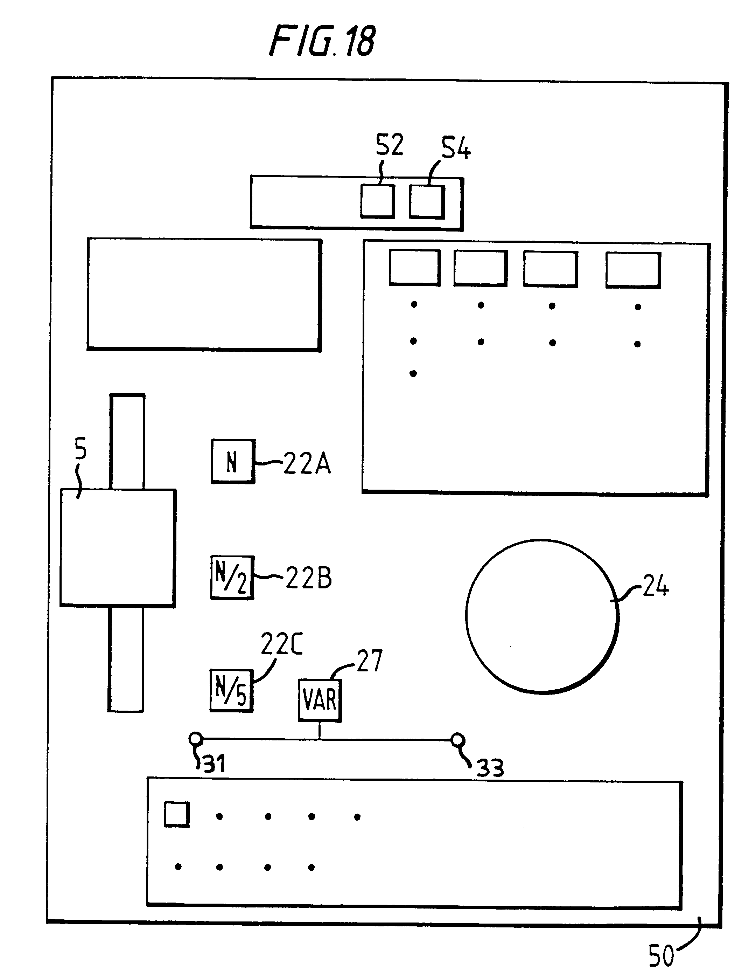

Each of the controllers 12A to 12N is equipped with a master mode request means or master mode operator (e.g. a switch button 52 - see Fig. 18) for setting a master mode and a release operator (e.g. another switch button 54 - see Fig. 18) for releasing a master mode. The master mode and release operators are provided on an operating panel of the controller. The operating mode is changed to a master mode in accordance with a predetermined condition to be described below by operating the master mode operator.

When one of the controllers 12A to 12N is in the master mode, it can output the control data D_{CONT} to the other ones of the controllers 12A to 12N, which are in the slave mode, and change the operation of the video tape recorders 2A to 3N connected to those other controllers 12A to 12N.

Thus in the editing system 10, when one of the controllers 12A to 12N is set to the master mode, it can control the entire editing system 10.

The editing system 10 is arranged such that the controllers 12A to 12N can be connected to the bus 14 and disconnected from the bus as required so that a desired number of video tape recorders can be connected in the editing system 10. This provides flexibility of connection of the controllers 12A to 12N with the result that a plurality of controlled objects (e.g. VTRs) can be controlled concurrently by means of a simple structure.

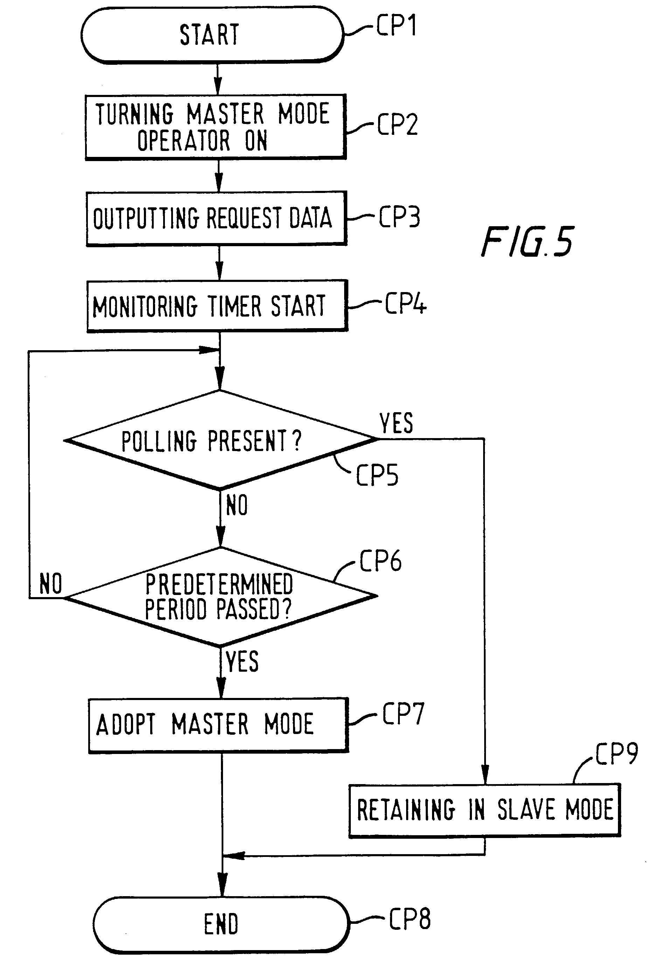

The detailed operation of control logic in a controller in the system 10 shown in Fig. 4 (this can be any one of the controllers 12A to 12N), for controlling a request by the controller to have its operating mode changed to a master mode, will now be described with reference to the flow chart of Fig. 5. As shown in Fig. 5, in the controller 12A to 12N, the control logic initially shifts from a start step CP1 to a step CP2, in which the master mode operator is activated (e.g. by the user), and then the operation shifts to a step CP3 in which the request data REQ is output to the bus 14, and then to a step CP4 to start a monitoring timer for monitoring a predetermined period.

In the other ones of the controllers 12A to 12N which are set to the slave mode, there will be no response to the request data REQ. However, in the controllers 12A to 12N which have previously been set to the master mode, the polling data POL will be sent back in response to the request data REQ. The operation mode of the controller concerned is changed in a step CP7 to the master mode only on condition that the polling data POL is not received by the controller (step CP5) in response to the request data REQ within a predetermined period set in a step CP6. Otherwise, the controller remains in the slave mode (step CP9) and the operation reaches an end step CP8. In other words the controller comprises means (logic CP7) for sensing whether master mode acknowledgement data (the POL data) is received.

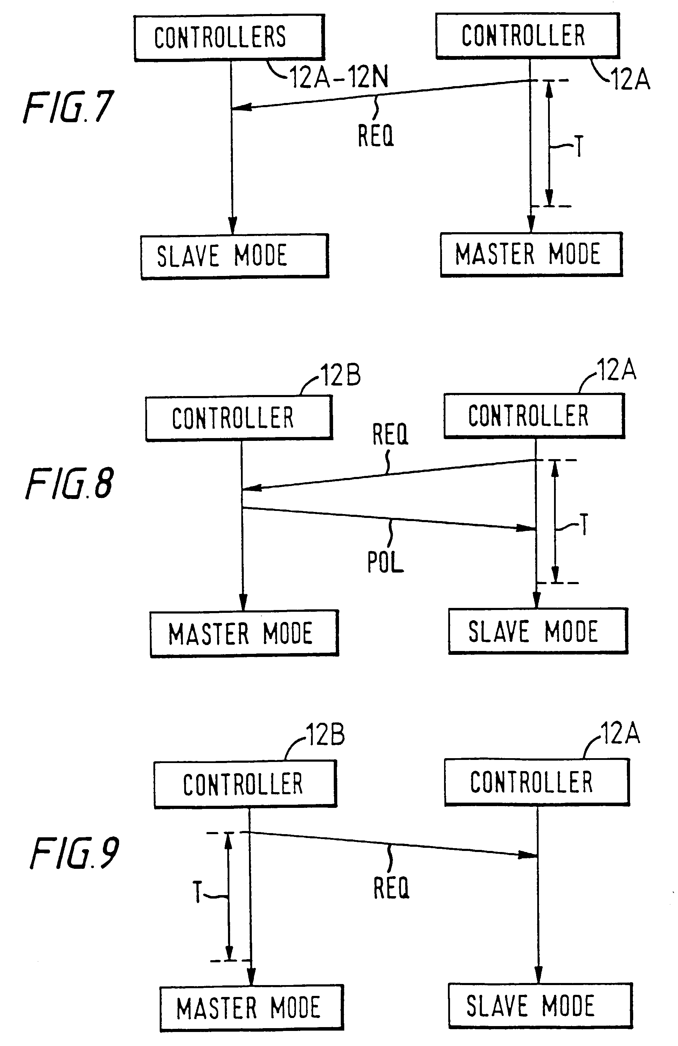

Fig. 6, shows the operation of a controller (i.e. any of the controllers 12A to 12N) which had previously been set to the master mode. The process shifts from a start step CP10 to a step CP11 at a predetermined timing in which a decision is made whether or not the request data REQ is output from another controller to the bus 14, and if the request data REQ is not output, then the procedure shifts to a step CP12 to end the process.

On the other hand, when the request data REQ has been output from another controller to the bus 14, a positive result is obtained in the step CP11 and the controller already in the master mode shifts to a step CP13 to output the polling data POL, and then shifts to the step CP12 to end the process.

Thus in any of the controllers 12A to 12N in which the master mode operator is activated, the request data REQ is sent, and then the bus 14 is monitored for a predetermined period to see whether or not the polling data POL is output onto the bus 14 by a controller already in the master mode, thereby deciding whether or not any of the controllers 12A to 12N has previously been set to the master mode.

Accordingly, as a result of changing the operation mode to the master mode only on condition that the polling data POL is not received, no more than one of the controllers 12A to 12N of those which are connected to the bus 14 can be set to the master mode at any one time.

Also, by changing the operation mode of a controller into the master mode only on condition that the polling data POL is not received, thus preventing a plurality of controllers 12A to 12N from changing to the master mode concurrently, mutual contention of the controllers 12A to 12N can be prevented and the editing system 10 can be controlled entirely securely.

In any of controllers 12A to 12N which has its master mode operator activated in the case where the polling data POL is not received in step CP5, a decision is made in step CP6 as to whether or not the monitoring timer indicates that the predetermined period has expired.

If the predetermined period has expired, then the controllers 12A to 12N return to step CP5, and a loop of steps CP5 - CP6 - CP5 is repeated until the predetermined period expires.

An example of this process will now be described for a situation where the master mode operator of the controller 12A is activated where the controllers 12A to 12N are all set to the slave mode. As illustrated in Fig. 7, the request data REQ is outputted from the controller 12A, but no polling data POL is sent back within the predetermined period T. As a result of this an affirmative result is obtained in step CP6 for the controller 12A, and, after shifting to step CP7, the controller 12A enters the master mode, and shifts to step CP8 to close the process.

Thus, among the controllers 12A to 12N, the one controller 12A only is set to the master mode, and the editing system 10 can be controlled entirely by the controller 12A in the master mode.

Another example is illustrated in Fig. 8 where the controller 12B is already set to the master mode. In this case, the polling data POL is sent back from the controller 12B before the period T of the monitoring timer expires, and hence an afirmative result is obtained in step CP5 for the controller 12A.

In this example, therefore, the controller 12A shifts to step CP9 where it is retained in the slave mode, and then shifts to step CP8 to close the process.

Thus, where one of the controllers 12A to 12N is already set to the master mode, the master mode is prevented from being established in another controller, and thus the editing system 10 can be controlled securely.

Activating the release operator for a controller in master mode releases the master mode for that controller. It is then possible to activate the master mode operator of a desired controller to set the desired controller in the master mode to control the whole system.

When a controller 12A previously set to the master mode powers up following an interruption of its power supply, it perform a process similar to that where the master mode operator is activated. In such a case, therefore, the controller 12A will adopt the master mode only where none of the controllers 12B to 12N is set to the master mode. This is illustrated in Fig. 9.

That is, even in the case where the power supply to one or more of the controllers 12A to 12N is cut where the controllers 12A to 12N are connected to the bus 14, any of controllers 12A to 12N previously set in the master mode before connection to the bus 14 will only adopt the master mode on the bus if no other of controllers 12A to 12N is currently set to the master mode.

Thus, in a case where the video tape recorders are reconnected, for example, after modifying the editing system, a mutual contention of the controllers 12A to 12N will be avoided, and then a plurality of video tape recorders can be controlled without a complex control structure.

Accordingly, users are able to modify the editing system easily by connecting and disconnecting the controllers 12A to 12N arbitrarily, thus enhancing a serviceability of the whole editing system.

As described above, a plurality of video tape recorders 2A to 4N connected to the controllers 12A to 12N can be controlled through a simple control structure in which the operating mode of the controllers 12A to 12N can be changed between a master mode and a slave mode over the bus 14.

In the sequence of operations described where a controller requesting permission to enter the master mode outputs request data REQ and then tests for the return of polling data POL within a predetermined period, only when no polling data is received (i.e. none of the other controllers is already set to the master mode) does the requesting controller change from the slave mode to the master mode, avoiding mutual contention of the controllers 12A to 12N for controlling a plurality of the video tape recorders 2A to 3N.

In the above-described embodiment, two video tape recorders are connected to each controller. However, each controller may control only one video tape recorder which is connected thereto. Similarly, each controller may control three or more video tape recorders connected thereto.

Further, in the above-described embodiment, the controllers are connected by means of a general purpose interface bus (GP-IB) However, the controllers could alternatively be connected through a bus such as RS232C, RS422 or the like. They could be connected through an exclusive bus or a two-way interface.

Still further, in the embodiment described above, the controllers control video tape recorders as controlled objects. However, the controlled objects could equally be in the form of a video disc player or the like.

Aspects of a controller for allowing the reproduction of information from a plurality of controlled devices (e.g. VTRs) to be synchronized, even if the reproduction speed is changed, will now be described. The reproduction of information is synchronized by controlling the apparatus so that timing information output by each of the apparatus for a speed set in a predetermined range matches each other.

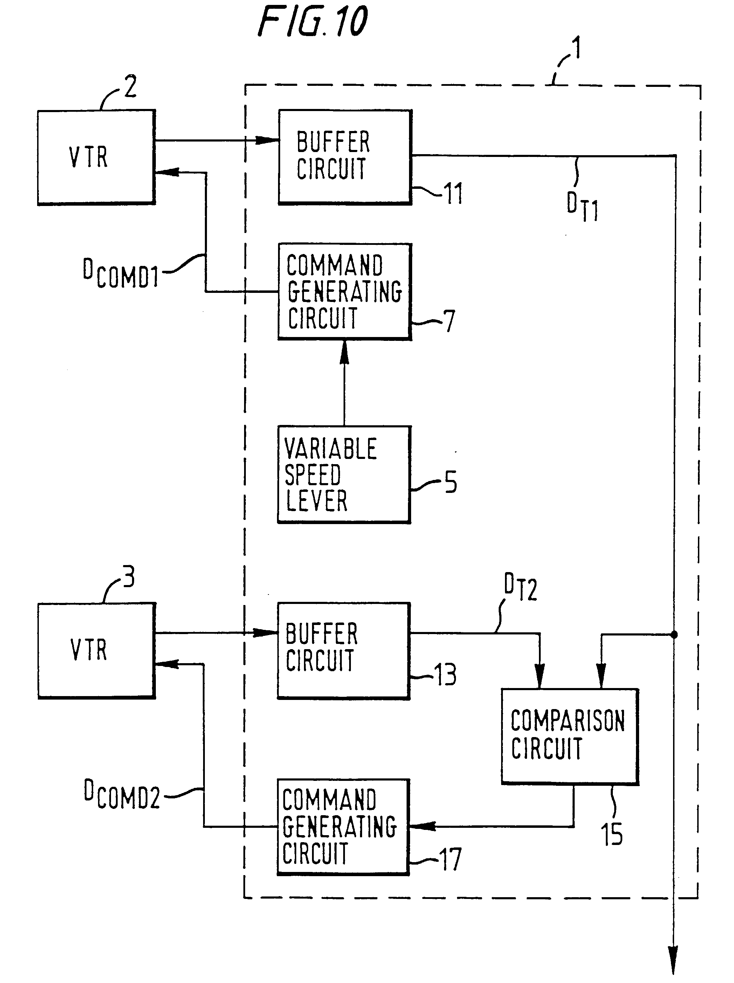

One example of a controller for providing synchronized reproduction to be performed on a plurality of VTRs at a variable speed is illustrated in Fig. 10. As shown in Fig. 10, a controller 1 controls the operations of video tape recorders (VTRs) 2 and 3.

The controller detects an amount of operation requested by a selector 5 (e.g. a variable-speed level 5) mounted on an operating panel of the controller. A command generating circuit 7 is responsive to a signal from the variable-speed lever 5 to output reproduction speed command data D_{COMD1} proportional to the amount of operation detected. As a result, the reproduction speed of the video tape recorder 2 is switched to a value in accordance to the amount of operation requested by the variable-speed lever 5.

Buffer circuits 11 and 13 convert fed-back signals SMPTEs output by the video tape recorders 2 and 3 into time information data D_{T1} and D_{T2} respectively which are fed to a comparison circuit 15. A result of the comparison between the time information data D_{T1} and D_{T2} is then provided to a command generating circuit 17.

The command generating circuit 17 generates reproduction speed control data D_{COMD2} based on the time codes D_{T1} and D_{T2}. The reproduction speed control data D_{COMD2} is output to the video tape recorder 3. Taking the time code D_{T1} as a reference, the video tape recorder 3 is thereby controlled. To be more specific, the reproduction speed of the video tape recorder 3 is controlled so that the time code D_{T2} matches the time code D_{T1}.

In this way, the reproduction speed of the video tape recorder 3 is adjusted to that of the video tape recorder 2 by comparing the time information D_{T2} to D_{T1}. Accordingly, reproduction of information from the video tape recorders 2 and 3 can be synchronized even if the reproduction speeds are varied.

In addition, the time code D_{T1} output by the buffer circuit 11 of the controller 1 is made available externally. Therefore, reproduction of information from another video tape recorder can also be synchronized as well by connecting an external controller to a signal line conveying the time information D_{T1}.

In this way, reproduction can be synchronized even if the reproduction speed is varied. For example, pictures of the same object are reproduced from the video tape recorders 2 and 3 in a slow motion. In this case, the reproduced picture can be switched between the video tape recorders 2 and 3 without generating inharmonious motions in the reproduced pictures.

Accordingly, such a controller can be used more easily and conveniently at a relay station, for example, for broadcasting a baseball game.

For example, the picture of a pitcher and that of a batter of a baseball game are to be displayed on the same screen in a slow motion. In this case, with the conventional apparatus, one operator operates a video tape recorder for reproducing the pitcher's picture while another operator operates another video tape recorder for reproducing the batter's picture in such a way that no inharmonious motion is seen on the screen.

With the reproducing apparatus provided, however, a single operator can synchronize reproduction of pictures at a variable speed with ease by merely operating the variable-speed lever 5 to give reproduced pictures free of inharmonious motions.

Since reproduction of pictures can be synchronized, reproduced pictures can be switched between the video tape recorders 2 and 3 without the necessity for the operators to monitor both the pictures to be switched at the same time as is the case with the conventional apparatus. By monitoring only one of the two reproduced pictures, they can be switched. Accordingly excess monitoring apparatus can be eliminated, resulting in fewer monitoring systems and a simplified overall configuration.

Particularly, in the case of a relaying car with limited space for accommodating relaying equipment, the reduced number of operators and the reduced number of monitoring apparatus required at the relaying site described above allow the small space available in the relaying car to be utilized efficiently and the work to be done in a more efficient manner.

In the configuration described above, receiving the reproduction speed control data D_{COMD1} output by the command generating circuit 7, the video tape recorder 2 runs at a reproduction speed determined by a shift amount requested by the variable-speed lever 5. Its time information D_{T1} is fed back to the comparison circuit 15 through the buffer circuit 11.

The video tape recorder 3 feeds back the time information D_{T2} to the comparison circuit 15 through the buffer circuit 13. At the saar time, the video tape recorder 3 is operating under the control of the reproduction speed control data D_{COMD2} output by the command generating circuit 17, the operation of which is, in turn, based on the comparison result produced by the comparison circuit 15. The reproduction speed of the video tape recorder 3 is adjusted so that the time code D_{T2} matches the time code D_{T1} and, thus, the reproduction of information from the video tape recorder 3 is synchronized with that from the video tape recorder 2.

In the above configuration, based on the comparison result between the time codes D_{T1} and D_{T2} of the video tape recorders 2 and 3, the reproduction speed control data D_{COMD2} is generated for controlling the reproduction speed of the video tape recorder 3. As a result, with only a simple apparatus configuration, reproduction of pictures can be synchronized even at a variable reproduction speed.

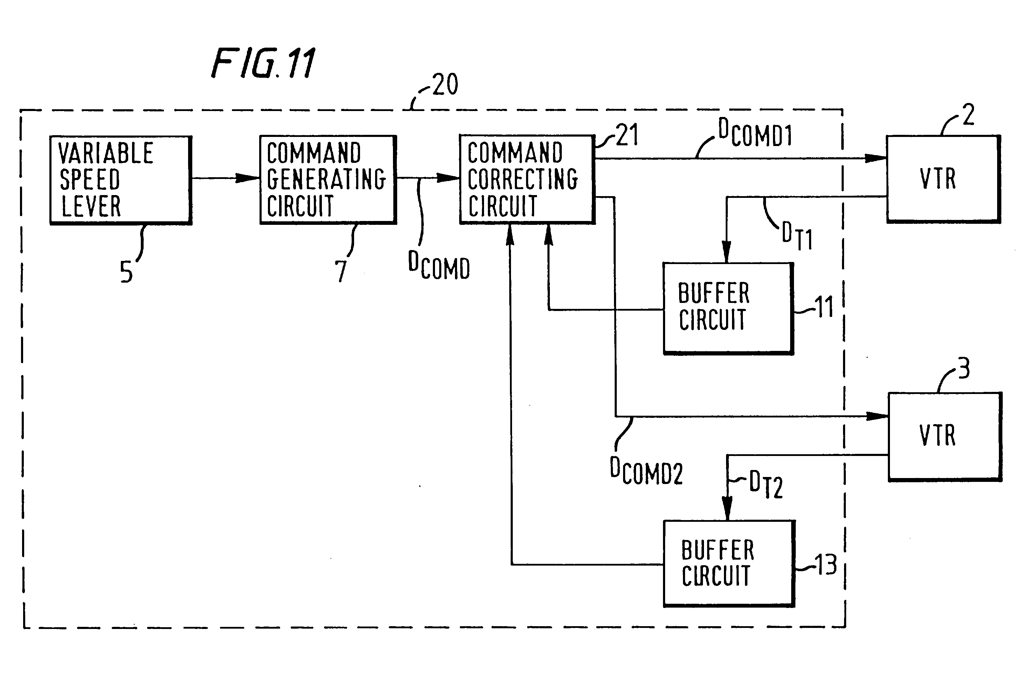

Fig. 11 shows an alternative to the arrangement shown in Fig. 10 using the same reference numerals used in that Figure. Reference numeral 20 shown in Fig. 11 is a controller for switching the control mode in accordance with the reproduction speed and correcting reproduction-speed control data D_{COMD} by use of a command correcting circuit 22 for each control mode.

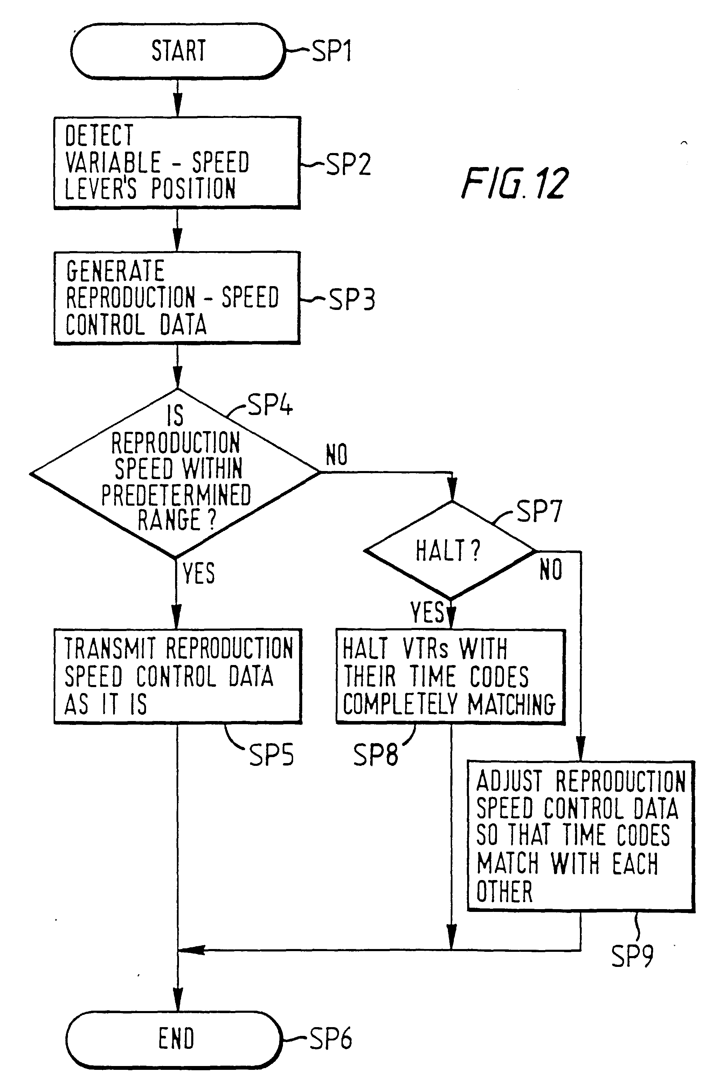

To be more specific, the controller 20 executes a processing procedure shown in Fig. 12 once a predetermined period of time. As shown in Fig. 12, the processing procedures begins with an operation SP1 which is followed by an operation SP2 in which the position of a variable-speed lever 5 is detected. The reproduction-speed control data D_{COMD} is produced by a command generating circuit 7 in a subsequent operation SP3.

Entering the next operation SP4, the controller 20 determines whether or not the reproduction speed determined by reproduction-speed corrected data D_{COMD} of a command correcting circuit 21 is within a predetermined range.

If a video tape recorder 2 or 3 reproduces picture information in the normal direction or if rewound at a speed exceeding a predetermined value, an acknowledge signal is received in the operation SP4 and the controller proceeds to an operation SP5.

In the operation SP5, the controller 20 outputs the reproduction-speed control data D_{COMD} to the video tape recorders 2 and 3 without modifying it by the command correcting circuit 21. Subsequently, the controller 20 moves forward to an operation SP6, completing the processing procedure.

A video tape recorder exists which has an inferior characteristic in that the reproduction speed does not quickly follow the reproduction-speed control data D_{COMD}. In this case, a corresponding change in the reproduction speed lags behind a variation in the reproduction-speed control data D_{COMD}.

Accordingly, in the case of such video tape recorders, even if the reproduction-speed control data D_{COMD} is output so that the time codes match each other as in the case with the first embodiment, a change in the reproduction speed lags behind a command given by the user's operation on the variable-speed lever 5. As a result, an inharmonious movement is seen in the reproduction picture when the user manipulates the variable-speed lever 5.

With regard to the inharmonious feeling resulted in by the operation of the variable-speed lever 5, however, the control scheme is such that, by raising the reproduction speed and varying the reproduction speed frequently, a discrepancy of the order of a few frames between the video tape recorders 2 and 3 is fortunately not observed visually.

Accordingly, in this example, the reproduction-speed control data D_{COMD} is not corrected in one way or another by the command correcting circuit 21 for high reproduction speeds. In this case, the reproduction speeds of the video tape recorders 2 and 3 are controlled by outputting the reproduction-speed control data D_{COMD} to the video tape recorders 2 and 3, not giving reproduction-speed responses to the operation of the variable-speed lever 5 the highest priority.

However, if the reproduction speed is determined by the operation SP4 to be within the predetermined range, the controller 20 proceed to an operation SP7.

The operation SP7 checks whether the reproduction-speed control data D_{COMD} output by the command correcting circuit 21 of the controller 20 is control data to halt the magnetic tapes of the video tape recorders 2 and 3. If an acknowledge response confirming that the reproduction-speed control data D_{COMD} is control data halting the magnetic tapes, the processing procedure proceeds to an operation SP8. Based on time codes D_{T1} and D_{T2}, the operation SP8 adjusts the reproduction-speed control data D_{COMD}.

To be more specific, using the command correcting circuit 21, the controller 20 corrects the reproduction-speed control data D_{COMD} so that the time code D_{T1} fed back by the video tape recorder 2 matches the time code D_{T2} fed back by the video tape recorder 3. The command correcting circuit 21 then outputs reproduction-speed control data D_{COMD1} and D_{COMD2} to the video tape recorders 2 and 3 respectively. Receiving the reproduction-speed control data D_{COMD1} and D_{COMD2}, the video tape recorders 2 and 3 halt the magnetic tapes at positions where the time codes D_{T1} and D_{T2} match each other completely. Subsequently, the controller 20 returns to the operation SP6, finishing the processing procedure.

If slow-motion reproduction is resumed after halting the video tape recorders 2 and 3 without performing the control executed by the operation SP8, the video tape recorders 2 and 3 will carry out the slow-motion reproduction, with one of them starting with a frame different from the other, resulting in extremely inharmonious visual feeling in the observed pictures.

On the other hand, if slow-motion reproduction is resumed after halting the magnetic tapes of the video tape recorders 2 and 3 at positions where the time code D_{T1} matches the time code D_{T2}, the video tape recorders 2 and 3 will be able to carry out the slow-motion reproduction, resulting in no inharmonious visual feeling in the observed pictures even after once halting the magnetic tapes.

If a response which denies control data for halting the magnetic tapes of the video tape recorders 2 and 3 is received in the operation SP7, the controller 20 executes an operation SP9.

In the operation SP9, the controller 20 synchronizes the reproduction of picture from the video tape recorders 2 and 3 by correcting the reproduction-speed control data D_{COMD} using the command correcting circuit 21. The command correcting circuit 22 outputs the reproduction-speed control data D_{COMD1} and D_{COMD2} to the video tape recorders 2 and 3 respectively so that the time code D_{T1} feed back by the video tape recorder 2 matches the time code D_{T2} fed back by the video tape recorder 3.

In this way, for low reproduction speeds, since the frame of the video tape recorder 2 is controlled to match the frame of the video tape recorder 3, pictures can be reproduced with no inharmonioous motions even if the video tape recorders 2 and 3 have inferior speed-response characteristics in that their speeds, to soar extent, lag behind commands given by the variable-speed lever 5.

Accordingly, by synchronizing the picture reproduction, pictures can be reproduced with no observed inharmonious motions.

The synchronized reproduction to reproduce pictures which are as a whole free of inharmonious motions is carried out by the operation SP9 only if the reproduction speed is determined by the operation SP4 to be within the predetermined range.

In this configuration, for high reproduction speeds, the video tape recorders 2 and 3 receive the reproduction-speed control data D_{COMD} from the command generating circuit 7 with no correction whatsoever, operating at a reproduction speed corresponding to a command given by the variable-speed lever 5.

For low reproduction speeds within the predetermined range, however, the controller 20 synchronizes the reproduction of pictures from the video tape recorders 2 and 3 by correcting the reproduction-speed control data D_{COMD} using the command correcting circuit 22 which outputs the corrected reproduction-speed control data D_{COMD1} and D_{COMD2} to the video tape recorders 2 and 3 respectively so that the time code D_{T1} fed back by the video tape recorder 2 matches the time code D_{T2} fed back by the video tape recorder 3.

It is thus possible to synchronize the reproduction of pictures from the video tape recorders 2 and 3 at a reproduction speed varying with a command given by the variable-speed lever 5 by performing control so that the time code D_{T1} fed back by the video tape recorder 2 matches the time code D_{T2} fed back by the video tape recorder 3.

In addition, using the command correcting circuit 21, the controller 20 can also correct the reproduction-speed control data D_{COMD}, outputting the corrected reproduction-speed control data D_{COMD1} and D_{COMD2} to the video tape recorders 2 and 3 respectively so as t halt the magnetic tapes at positions where the time code D_{T1} fed back by the video tape recorder 2 completely matches the time code D_{T2} fed back by the video tape recorder 3 and then resumes the reproduction of pictures from the video tape recorders 2 and 3.

With the configuration shown in Fig. 11, only for low reproduction speeds within a predetermine range, does the controller 20 synchronize the reproduction of pictures from the video tape recorders 2 and 3 by correcting the reproduction-speed control data D_{COMD} using the command correcting circuit 22 in order to make the time code D_{T1} fed back by the video recorder 2 match the time code D_{T2} fed back by the video tape recorder 3, so that the synchronously reproduced pictures as a whole contain no inharmonious motions.

Thus the controller 20 in Fig. 11 controls reproduction speeds of first and second controlled devices (i.e. VTRs 2 and 3) by outputting reproduction-speed control signals (D_{COMD}) D_{COMD1} and D_{COMD2} to the controlled devices 2 and 3. Based on the reproduction-speed control signals (D_{COMD}) D_{COMD1} and D_{COMD2}, the controller 20 first switches the control mode of the controlled devices 2 and 3 so as to set their reproduction speeds within a predetermined range. The controller 20 then adjusts the reproduction control signals (D_{COMD}) D_{COMD1} and D_{COMD2} so that time information D_{T1} fed back by the controlled device 2 matches time information D_{T2} fed back by the controlled device 3.

By correcting the reproduction speed control signals (D_{COMD}) D_{COMD1} and D_{COMD2} and outputting the reproduction speed control signals (D_{COMD}) D_{COMD1} and D_{COMD2} to the first and second controlled devices 2 and 3 respectively so that the time information D_{T1} fed back by the first controlled device 2 matches the time information D_{T2} fed back by the second controlled device 3, the reproduction of information can be synchronized even if the reproduction speed is varied.

The examples described with reference to Figs. 10 to 12 utilize the SMPTE time code. It should be noted, however, that a variety of time codes are applicable. Furthermore, a variety of time information can also be used as a reference in addition to the time code.

The embodiments described above adopt a variable-speed lever as a means for adjusting the reproduction speed. In addition, the invention is also applicable to a configuration employing a variable-speed dial as a means for adjusting the reproduction speed as will be explained hereinbelow.

Also, in the embodiments described above, a video tape recorder is used as the controlled device. Note, however, that the controlled device need not be a VTR for the reproduction of pictures, but could also be a controlled device for example for variable-speed reproduction of information from a variety of video equipment.

Examples of controllers have been described which allow reproduction of information from controlled devices to be synchronized at a reproduction speed varying within a predetermined range; the devices being controlled by adjusting reproduction-speed control signals so that time information fed back by the device matches each other.

Aspects of a controller for a playback device such as a VTR which is operable at a variable speed will now be described.

In one proposal for video tape recorder allowing pictures to be reproduced at a variable speed, the reproduction speed is first set to a predetermined value and then a variable-speed lever is adjusted in order to reproduce pictures at a desired reproduction speed.

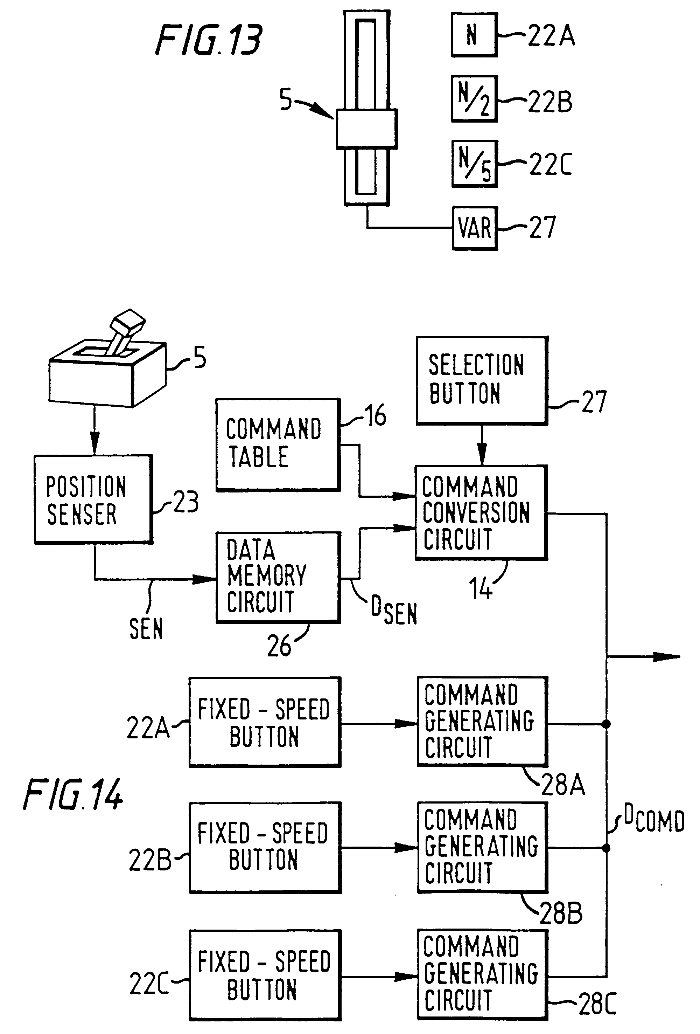

To be more specific, the controller of the proposed video tape recorder is equipped with an operational panel comprising a variable-speed lever operating button 27 in addition to reproduction-speed selecting buttons 22A, 22B and 22C as shown in Fig. 13. The variable-speed operating button 28 is used for switching the variable-speed lever 5 to an on state. The reproduction-speed selecting buttons 22A, 22B and 22C which are referred to hereafter as fixed-speed selecting buttons are used for setting the reproduction speed typically to a normal reproduction speed, half the normal reproduction speed or one-fifth of the normal reproduction speed.

When the fixed-speed selecting button 22A, 22B or 22C is switched on, a command generating circuit 28A, 28B or 28C corresponding to the fixed-speed selecting button 22A, 22B or 22C respectively outputs a control command D_{COMD} to the main body of the video tape recorder as shown in Fig. 14. In response to the control command D_{COMD}, the video tape recorder runs at the normal reproduction speed, half the normal reproduction speed or one-fifth of the normal reproduction speed.

A lever operation sensor 23 shown in Fig. 14 detects an amount of operation requested by the variable-speed lever 5, outputting a signal SEN which represents the amount of operation requested by the variable-speed lever 5 to a data memory circuit 26.

With the variable-speed operating button 27 switched on, a command converting circuit 14 accesses a command table 16, outputting the control command D_{COMD} based on operation data D_{SEN}, the signal SEN once stored in the data memory circuit 26. The reproduction speed of the video tape recorder is thus set to a value determined by the operation amount requested by the variable-speed lever 5.

In this way, the variable-speed operating button 27 is switched on and then the variable-speed lever 5 is operated, allowing the reproduction speed to be set to a desired value.

It has also been proposed to provide a video tape recorder with a rotary dial replacing the variable-speed lever 5. The rotary dial which is referred to hereafter as a variable-speed dial also allows the reproduction speed to be adjusted.

The variable-speed lever 5 generally makes the video tape recorder easier to operate in comparison to one with the variable-speed dial when used at a relay station, for example, for broadcasting a sport program such as a baseball game.

On the other hand, a variable-speed dial makes the video tape recorder easier to operate in comparison to a variable-speed lever 5 when used in a broadcasting station, for example, for editing work.

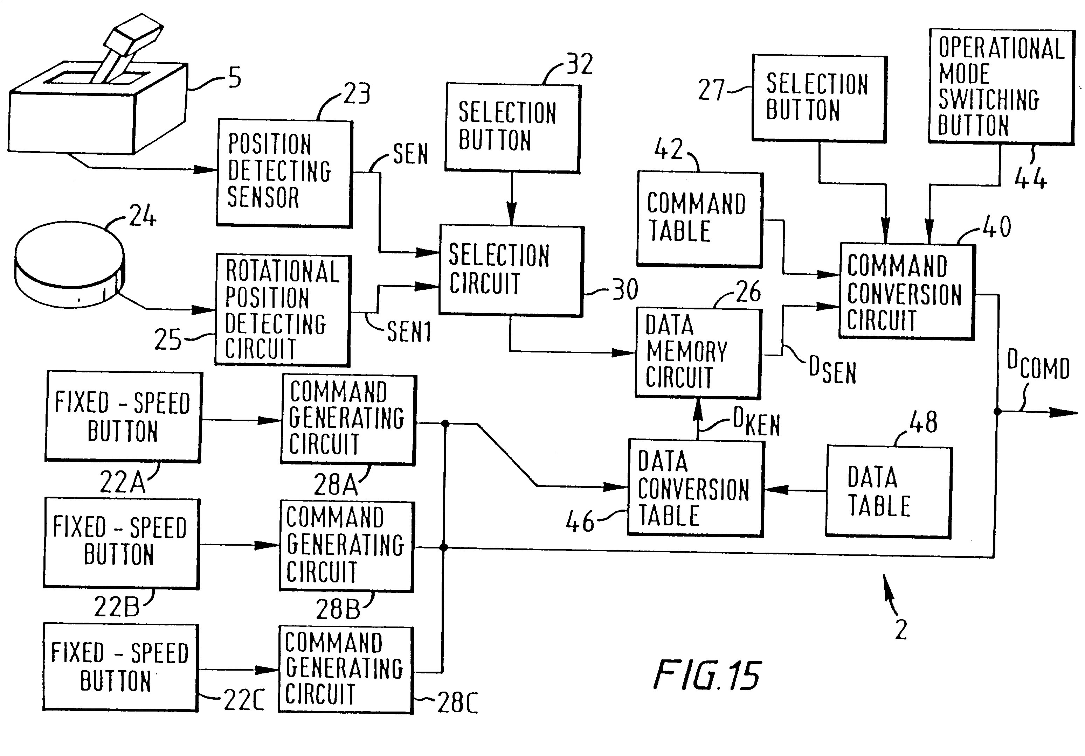

Fig. 15 illustrates an overview of elements of a controller 29 in accordance with the invention for controlling a VTR, the controller including a variable-speed lever 5 for varying the reproduction speed with a first position detecting means 23 for detecting the position of the variable-speed lever 5 and a variable speed dial 24 for varying the reproduction speed with a second position detecting means 25 for detecting the rotational position of the variable-speed dial 24. Reproduction-speed switching means 26, 30, 32, 40 and 42 are provided for switching the reproduction speed in accordance with detection results SEN or SEN1 output by the first and second positional detecting arans 23 and 25 respectively.

The controller also includes reproduction-speed selecting operation buttons 22A, 22B and 22C for selecting a value for the reproduction speed, the variable-speed dial 24 for varying the reproduction speed, the second position detecting means 25 for outputting the rotational position information SEN1 in accordance with the rotational position of the speed-variable dial 24, reproduction-speed switching means 27, 28A, 28B, 28C, 40 and 42 for setting the reproduction speed to a value based on the selection of the reproduction-speed selecting operation buttons 22A, 22B and 22C or rotational position information D_{SEN} and initializing means 26, 46 and 48 for initializing the rotational position information SEN1 output by the position detecting means 25 in accordance with the reproduction speed set so ear and outputting the initial value to the reproduction-speed switching means 27, 28A, 28B, 28C, 40 and 42 when the variable-speed dial 24 is selected.

The variable-speed lever 5 and the variable-speed dial 24 are provided so as to allow the reproduction speed to be switched in accordance with information SEN or SEN1 which represents the position of the variable-speed lever 5 or the variable-speed dial 24 respectively. Accordingly, the operator can adjust the reproduction speed by using the variable-speed lever 5 or the variable-speed dial 24 as necessary. The fact that either the variable-speed lever 5 or the variable-speed dial 24 can be selected for adjusting the reproduction speed makes the reproducing apparatus easier to use.

Furthermore, when the variable-speed dial 24 is selected, the second part of the invention allows the rotational position information SEN1 output by the second position detecting means 25 to be initialized in accordance with the reproduction speed set so far and the initial value to be output to the reproduction-speed switching means 27, 28A, 28B, 28C, 40 and 42. By doing this, an unnatural change in the reproduction speed that occurs right after the reproduction speed is selected can be eliminated effectively.

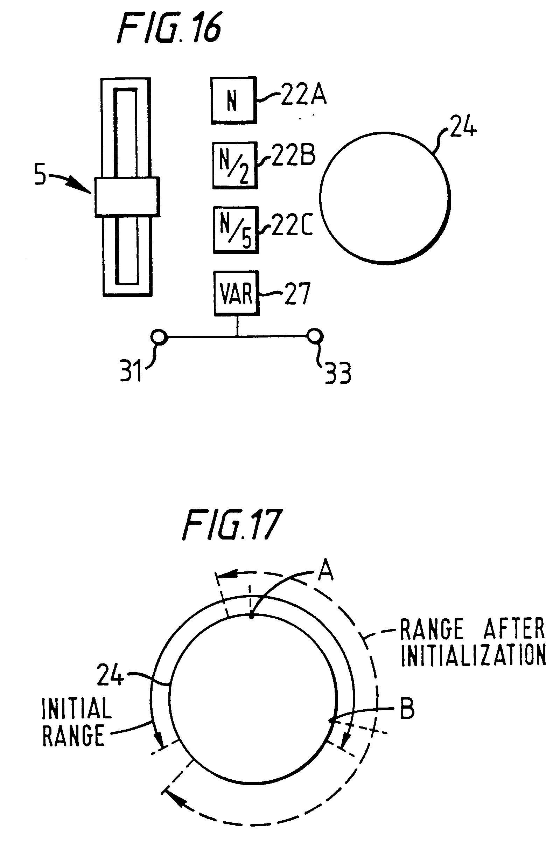

As shown in Fig. 16, fixed-speed buttons 22A, 22B and 22C are laid out on an operational panel of the controller 29, being sandwiched by a variable-speed lever 5 and the variable-speed dial 24. Light emitting diodes which serve as display lamps 31 and 33 are fixed below the variable-speed lever 5 and the variable-speed dial 24.

A selection circuit 30 shown in Fig. 15 works in response to the operation of a selection button 32. A position sensor 23 and the rotational position sensor 25 detect the position of the variable-speed lever 5 and the rotational position of the variable-speed dial 24 respectively, outputting detection results SEN and SEN1 either of which is selected by the selection circuit 30 as an input to a data armory circuit 26.

When a selection button 27 is turned on, the selection circuit 30 switches on either the variable-speed lever 5 or the variable-speed dial 24, allowing the operator to adjust the reproduction speed by operating either the variable-speed lever 5 or the variable-speed dial 24.

The selection circuit 30 turns on either the display lamp 31 or 33 depending upon whether the variable-speed lever 5 or the variable-speed dial 24 has been selected. In this way, the operator can visually identify which of the variable-speed lever 5 and the variable-speed dial 24 has been selected with the selection button 27 turned on.

When necessary, the operator can select either the variable-speed lever 5 or the variable-speed dial 24 for use in the adjustment of the reproduction speed by operating the selection button 27. Accordingly, the controller 20 of the video tape recorder becomes easier to use.

When the selection button 27 is turned on, a command conversion circuit 40 accesses a command table 42, outputting control data D_{COMD} the magnitude of which is determined by the position of the variable-speed lever 6 or the rotational position of the variable-speed dial 24. The position of the variable-speed lever 5 or the rotational position of the variable-speed dial 24 is indicated by the position data SEN or by the rotational position data SEN1 respectively which is once stored in the data memory circuit 26. The control data D_{COMD} sets the reproduction speed of the video tape recorder to a value determined by the position of the variable-speed lever 5 or the rotational position of the variable-speed dial 24.

When an operational mode switching button 44 is turned on, the command conversion circuit 40 accesses a different area of the command table 42, outputting the command data D_{COMD} having a special value which causes the video tape recorder to rewind or run at a fast speed depending upon the rotational position of the variable-speed dial 24.

By operating the variable-speed lever 5 or the variable-speed dial 24, it is thus possible for the operator not only to adjust the reproduction speed but also to search for head of the tape, for example.

The operator who is used to a variable-speed lever 5 can thus operate the additional variable-speed dial 24 with ease if necessary for searching for a program, for example. In this way, the controller 29 of the video tape recorder is made easy to operate by the addition of the variable-speed dial 24.

On the other hand, the operator who is not used to the operation of the variable-speed lever 5 can operate the controller 29 like a video tape recorder equipped with the conventional variable-speed dial in order to reproduce information free of inharmonious components.

In addition, the variable-speed lever 5 can be used as necessary for simplifying editing work, etc.

Receiving the control data D_{COMD} output by a command generating circuit 28A, 28B or 28C, a data conversion circuit 46 accesses a data table 48, converting the control data D_{COMD} into rotational position data D_{KEN} of the rotational position detecting sensor 22. The conversion performed by the data conversion circuit 46 is a reversed operation of the command conversion circuit 40.

The data conversion circuit 46 then outputs the rotational position data D_{KEN} to the data memory circuit 26, initializing the variable-speed dial 24.

In this way, when the selection button 27 is turned on, the data conversion circuit 46 updates the rotation position data SEN1 with the rotation position data D_{KEN} which is transmitted to the command conversion circuit 40 from the memory circuit 12.

Accordingly, the control data D_{COMD} output by the command conversion circuit 40 is a continuation of a value which was determined by the selected fixed-speed selecting button 22A, 22B or 22C immediately before the selection button 27 is turned on.

In this way, even if the operation is switched from the fixed-speed selecting button 22A, 22B or 22C to the variable-speed dial 24, the reproduction speed immediately before the operation switching can be retained allowing the operation to be switched without generating abrupt changes in the reproduction speed. It is thus possible to effectively eliminate unnatural variations from the reproduction speed at such switching of operation.

With a conventional video tape recorder, as the operation is switched from the fixed-speed button 22A, 22B or 22C to the variable-speed lever 5, the reproduction speed changes abruptly and, thus, unnaturally from a value determined by the selected fixed-speed button 22A, 22B or 22C to a value set by the variable-speed lever 5. The unnatural and abrupt change in the reproduction speed cannot be avoided.

In the case of the embodiment, however, the variable-speed dial 24 is initialized with a value right after the operation is switched from the fixed-speed button 22A, 22B or 22C to the variable-speed dial 24. As described previously, the initial value is equal to the reproduction speed prior to the switching of operation from the fixed-speed button 22A, 22B or 22C to the variable-speed dial 24. Accordingly, such an unnatural and abrupt change in the reproduction speed can be eliminated effectively.

As the rotational position data SEN1 output by the rotational-position detecting sensor 25 is sequentially varied, the data conversion circuit 46 further adjusts the rotational position data D_{SEN} output by the data memory circuit 26 within a predetermined range having the rotational position data D_{KEN} as a centre in accordance with the variation of the rotational position data SEN1.

In addition, if the rotational position data D_{SCN} is about to change, exceeding the predetermined range, the data conversion circuit 46 sends a control signal to the variable-speed dial 24 in order to prevent the variable-speed dial 24 from further rotating.

For example, assume that the variable-speed dial 24 can be initially rotated by 120 degrees in both the clockwise and counterclockwise directions from a centre point A as shown in Fig. 3. The operation is then switched to the fixed-speed selecting button 22A, 22B or 22C. When the operation is switched back to the variable-speed dial 24, the centre of rotation may be shifted from the point A to a new point B so that the variable-speed dial can now be rotated by 120 degrees in both the clockwise and counterclockwise directions from the new centre point B.

It should be noted that the variable-speed 24 can be rotated within a range which is predetermined by taking the initial value of the rotational data D_{SEN} as a reference. The same adjustment range as that prior to the reselection of the variable-speed dial 24 can thus be retained.

Accordingly, because of the fact that an unnatural and abrupt change in the reproduction speed can be prevented from occurring right after the selection of the variable-speed dial 24 by initializing the rotational data D_{SEN}, the operator can adjust the reproduction speed by rotating the variable-speed dial 24 without causing inharmonious feeling as if the variable-speed dial 24 had been selected by once presetting the variable-speed dial 24 to a position corresponding to a reproduction speed requested by the fixed-speed selecting button 22A, 22B or 22C.

Here, a position detecting sensor 23 works as a first position detecting means for detecting the position of the variable-speed lever 5 whereas the rotational-position detecting sensor 25 functions as a second position detecting means for detecting the rotational position of the variable-speed dial 24.

In addition, the data memory circuit 26, the selection circuit 30, the selection button 32, the command conversion circuit 40 and the command table 42 constitute a reproduction-speed switching means for switching the reproduction speed in accordance with the detection result SEN or SEN1 output by the first or second position detecting means respectively.

On the other hand the fixed-speed buttons 22A, 22B and 22C form a reproduction speed selecting means for selecting a reproduction-speed while the rotational position detecting sensor 22 serves as a rotational position detecting means for outputting the rotational position information SEN1 which represents the rotational position of the variable-speed dial 24.

Furthermore, the selection button 27, the command generating circuits 28A, 28B and 28C, the command conversion circuit 40 and the command table 42 together constitute a reproduction-speed switching arans for switching the reproduction speed in response to the operation of the selection button 27 to a value determined by the selection of the fixed-speed buttons 22A, 22B and 22C or to a value based on the rotational position information D_{SEN}. The data memory circuits 26 the data conversion circuit 46 and the data table 48 together form an initializing means for initializing the rotational position information SEN1 output by the second position detecting means to a value equal to the reproduction speed being set so far and feeding the initial value to the reproduction-speed switching means whenever the variable-speed dial 24 is selected for adjusting the reproduction speed.

In the configuration described above, when the fixed-speed button 22A, 22B or 22C is turned on, the control data D_{COMD} is output by the command generating circuits 28A, 28B or 28C associated with the fixed-speed button 22A, 22B or 22C respectively. In this case, information is reproduced from a magnetic tape moving at a reproduction speed determined by the fixed-speed button 22A, 22B or 22C.

Incidentally, when the selection buttons 27 and 32 are operated to select the variable-speed lever 5, the position data SEN representing the position of the variable-speed lever 5 is output by the position detecting sensor 23 through the selection circuit 30.

Based on the position data SEN, a command table 42 is accessed for eventually causing the command conversion circuit 40 to output the control data D_{COM} having a value corresponding to a reproduction speed requested by the variable-speed lever 5. As a result, information can be reproduced at a desired reproduction speed by operating the variable-speed lever 5.

On the other hand, when the selection buttons 27 and 32 are operated to select the variable-speed dial 24, the position data SEN1 having a value corresponding to a reproduction speed requested by the variable-speed dial 24 is output by the rotational-position detecting sensor 25 through the selection circuit 30.

The position data SEN1 eventually causes the command conversion circuit 40 to output the control data D_{COMD} having a value corresponding to a reproduction speed requested by the variable-speed dial 24. As a result, information can be reproduced at a desired reproduction speed by operating the variable-speed dial 24.

In this way, either the variable-speed lever 5 or the variable-speed dial 24 can be selected as necessary for adjusting the reproduction speed, allowing the video tape recorder to be used more easily.

When the operation is switched from the fixed-speed button 22A, 22B or 22C to the variable-speed dial 24, the rotational position data D_{KEN} having a value corresponding to the reproduction speed being set so far is output by the data conversion circuit 46. The rotational position data D_{KEN} is used to update the rotational position data D_{SEN} output by the data memory circuit 27.

In this way, the variable-speed dial 24 is initialized, causing the video tape recorder to retain the reproduction speed being set so far in case the operation is switched to the variable-speed dial 24.

When the operation is switched to the variable-speed dial 24, the reproduction speed of the video tape recorder is adjusted by manipulating the variable-speed dial 24 with the reproduction speed prior to the switching of the operation taken as a start point. Accordingly, an abrupt and unnatural change in the reproduction speed that would otherwise occur upon the selection of the variable-speed dial 24 can be virtually eliminated.

The configuration described above allows either the variable-speed lever 5 or the variable-speed dial 24 to be selected for use in adjusting the reproduction speed. It is thus possible to make the video tape recorder easier to use by virtue of the feature that allows either the variable-speed lever 5 or the variable-speed dial 24 to be selected.

In addition, the variable-speed dial 24 is initialized right after being selected to a value corresponding to the reproduction speed prior to the selection of the variable-speed dial 24, allowing an abrupt and unnatural change in the reproduction speed that would otherwise occur upon the selection of the variable-speed dial 24 to be effectively eliminated.

An embodiment that initializes the variable-speed dial 24 upon the switching of operation from the fixed-speed button 22A, 22B or 22C to the variable-speed dial 24 has been described with reference to Figs. 13 to 15. It should be noted, however, that another embodiment could initialize the variable-speed dial 24 upon switching of operation from the variable-speed lever 5 to the variable-speed dial 24.

Also in the embodiment described with reference to Figs. 13 to 15 above, the variable-speed dial 24 is initialized by updating the rotational position SEN1 once stored in the data memory circuit 12 with the rotational position data D_{KEN} output by the data conversion circuit 46. A variety of alternative initialisation techniques can also be applied as well as the initializing means described herein.

In the case of the embodiment described with reference to Figs. 13 to 15 above, the invention is applied to a video tape recorder. It should be noted, however, that the invention is applicable not only to video tape recorders but also to a wide range of reproduction devices operating at variable speeds, such as a video disc player.

Fig. 16 is a schematic diagram of a control panel 50 of an example of a controller in accordance with the invention. The control panel 50 comprises many controls not relevant to the present invention, and accordingly are not described herein. In addition, the control panel comprises a selection button 27 for selecting either a variable-speed lever 6 or a variable speed dial 24. The controller comprises a plurality of buttons 22A, 22B and 22C for selecting variable speeds. In addition, the controller comprises a button 52 for requesting that the controller operates in master mode and a button 54 for deselecting master mode.

## Claims

1. A controller for controlling at least one reproduction apparatus (2A, 3A), wherein:
the controller (12A) is connectable to at least one further controller to define a control system (10), which further controller (12B;...;12N) is for controlling at least one further reproduction apparatus (2B, 3B;...;2N, 3N)
the controller (12A) and the further controller (12B;...;12N) are each selectively operable in a master mode or in a slave mode; and
the controller (12A) is operable in the master mode to control the reproduction apparatus (2A, 3A) and to control, via the further controller (12B;...;12N), the further reproduction apparatus (2B, 3B;...; 2N, 3N) and is operable in said slave mode to permit the reproduction apparatus (12A) to be controlled by the further controller (12B;...;12N) when said further controller (12B;...;12N) is in the master mode; characterised by
said controller comprising:
master mode request means (CP2);
means (CP3) for responding to activation of the master mode request means (CP2) to issue master mode request data (REQ) to means for connecting the controller (12A) to the further controller (12B;...;12N);
means (CP5, CP6, CP7, CP9) for sensing whether master mode acknowledgement data (POL) indicative of a further controller already in the master mode is received from the connection means (14) within a predetermined period, the sensing means maintaining (CP9) the controller in the slave mode if the master mode acknowledgement data (POL) is received within the period and switching (CP7) the controller to the master mode otherwise.

2. A controller as claimed in Claim 1 comprising:
means (CP11) for responding to receipt of the master mode request data from the connection means (14) when said controller is in the master mode to issue (CP13), within the predetermined period, the master mode acknowledgement signal (POL) to the connection means (14).

3. A controller as claimed in Claim 1 or Claim 2 wherein the controller (12A) controls a reproduction speed of a first reproduction apparatus (2) and a reproduction speed of a second reproduction apparatus (3) by outputting a reproduction-speed control signal (D_{COMD1}) to the first reproduction apparatus (2) and a reproduction-speed control signal (D_{COMD2}) to the second reproduction apparatus (3), the controller permitting control mode switching based on the reproduction-speed control signals (D_{COMB1} D_{COMB2}) to be performed and, for reproduction speeds within a predetermined range, the reproduction-speed control signals to be adjusted so that time information fed back by the first reproduction apparatus (D_{T1}) matches with time information fed back by the second reproduction apparatus (D_{T2}).

4. A controller as claimed in any one of the preceding claims comprising:
reproduction-speed selecting means (22A, 22B, 22C) for selecting a value for a reproduction speed;
a variable-speed dial (24) for varying the reproduction speed;
position detecting means (25) for outputting rotational position information representing a rotational position of the variable-speed dial (24);
reproduction-speed switching means (40) for setting the reproduction speed in accordance with a selecting operation to a value determined by operating the reproduction-speed selecting means (22A, 22B, 22C) or a value based on the rotational position information output by the position detecting means (25), and
initializing means (26, 46, 48) operable on selection of the variable-speed dial for initializing the rotational position information output by the position detecting means (25) to a value corresponding to a reproduction speed prior to the selection of the variable-speed dial (24), and outputting the initialized rotational position information to the reproduction-speed switching means (40).

5. A controller as claimed in any one of the preceding claims comprising:
a variable-speed lever (5) for varying a reproduction speed,
first position detecting means (23) for detecting the position of the variable-speed lever,
a variable-speed dial (24) for varying the reproduction speed,
second position detecting means (25) for detecting a rotational position of the variable-speed dial (24), and
reproduction-speed switching means (40) for switching said reproduction speed in accordance with detection results produced by the first position detecting means (23) and the second position detecting means (25).

6. A control system for controlling a plurality of apparatus (2A, 3A;...;2N, 3N), said control system comprising a plurality of controllers (12A;...;12N) and connection means (14) for interconnecting the controllers (12A;...;12N) wherein:
each controller (12A;...;12N) is connected to at least one apparatus (2A, 3A;...;2N, 3N) for controlling said apparatus;
each controller (12A;...;12N) is selectively operable in a master mode or in a slave mode with at most one controller being operable in the master mode at any time; and
an apparatus connected to a controller (12A;...;12N) operating in the slave mode is controllable by a said controller (12A;...;12N) operating in the master mode; characterised by
each said controller comprising:
master mode request means (CP2);
means (CP3) for responding to activation of the master mode request means (CP2) to issue master mode request data (REQ) to means for connecting the controller (12A) to the other controllers (12B;...;12N);
means (CP5, CP6, CP7, CP9) for sensing whether master mode acknowledgement data (POL) indicative of a further controller already in the master mode is received from the connection means (14) within a predetermined period, the sensing means maintaining (CP9) the controller in the slave mode if the master mode acknowledgement data (POL) is received within the period and switching (CP7) the controller to the master mode otherwise.

## Patentansprüche

1. Steuerung zur Steuerung wenigstens einer Wiedergabevorrichtung (2A, 3A), wobei:
die Steuerung (12A) mit wenigstens einer weiteren Steuerung verbindbar ist, um ein Steuersystem (10) zu definieren, welche weitere Steuerung (12B; ...; 12N) der Steuerung wenigstens einer weiteren Wiedergabevorrichtung (2B, 3B; ...; 2N, 3N) dient;
die Steuerung (12A) und die weitere Steuerung (12B; ...; 12N) jeweils selektiv in einem Master-Modus oder in einem Slave-Modus betreibbar sind; und
die Steuerung (12A) in dem Master-Modus betreibbar ist, die Wiedergabevorrichtung (2A, 3A) zu steuern und über die weitere Steuerung (12B; ...; 12N) die weitere Wiedergabevorrichtung (2B, 3B; ...; 2N, 3N) zu steuern und betreibbar ist, in dem Slave-Modus zu erlauben, daß die Wiedergabevorrichtung (12A) durch die weitere Steuerung (12B; ...; 12N) gesteuert wird, wenn sich die weitere Steuerung (12B; ...; 12N) im Master-Modus befindet;
**dadurch gekennzeichnet,** daß die Steuerung aufweist:
eine Master-Modus-Anforderungseinrichtung (CP2);
eine Einrichtung (CP3) zum Ansprechen auf die Aktivierung der Master-Modus-Anforderungseinrichtung (CP2), um Master-Modus-Anforderungsdaten (REQ) an eine Einrichtung zur Verbindung der Steuerung (12A) mit der weiteren Steuerung (12B; ...; 12N) auszugeben;
eine Einrichtung (CP5, CP6, CP7, CP9) zur Erfassung, ob Master-Modus-Bestätigungsdaten (POL), die angeben, ob eine weitere Steuerung bereits im Master-Modus ist, von der Verbindungseinrichtung (14) innerhalb einer festgelegten Zeitdauer empfangen werden, wobei die Erfassungseinrichtung (CP9) die Steuerung im Slave-Modus hält, wenn die Master-Modus-Bestätigungsdaten (POL) innerhalb der Zeitdauer empfangen werden und die Steuerung andernfalls in den Master-Modus schaltet (CP7).

2. Steuerung gemäß Anspruch 1, aufweisend:
eine Einrichtung (CP11), die auf den Empfang der Master-Modus-Anforderungsdaten von der Verbindungseinrichtung (14) antwortet, wenn die Steuerung im Master-Modus ist, indem sie innerhalb der festgelegten Zeitdauer das Master-Modus-Bestätigungssignal (POL) an die Verbindungseinrichtung (14) ausgibt (CP13).

3. Steuerung gemäß Anspruch 1 oder 2,
wobei die Steuerung (12A) die Wiedergabegeschwindigkeit einer ersten Wiedergabevorrichtung (2) und die Wiedergabegeschwindigkeit einer zweiten Wiedergabevorrichtung (3) durch Ausgabe eines Wiedergabegeschwindigkeits-Steuersignales (D_{COMD1}) an die erste Wiedergabevorrichtung (2) und eines zweiten Wiedergabegeschwindigkeits-Steuersignales (D_{COMD2}) an die zweite Wiedergabevorrichtung (3) steuert, die Steuerung eine Steuermodusumschaltung basierend auf den Wiedergabegeschwindigkeits-Steuersignalen (D_{COMB1}, D_{COMB2}) erlaubt und erlaubt, daß für Wiedergabegeschwindigkeiten innerhalb eines festgelegten Bereiches die Wiedergabegeschwindigkeits-Steuersignale so eingestellt werden, daß durch die erste Wiedergabevorrichtung (D_{T1}) rückgekoppelte Zeitinformation mit durch die zweite Wiedergabevorrichtung (D_{T2}) rückgekoppelter Zeitinformation angepaßt ist.

4. Steuerung gemäß einem der vorangehenden Ansprüche, aufweisend:
eine Wiedergabegeschwindigkeits Auswahleinrichtung (22A, 22B, 22C) zur Auswahl eines Wertes für eine Wiedergabegeschwindigkeit;
eine Geschwindigkeitsveränderungs-Wähleinrichtung (24) zur Veränderung der Wiedergabegeschwindigkeit;
eine Positionserfassungseinrichtung (25) zur Ausgabe von Drehpositionsinformation, die eine Drehposition der Geschwindigkeitsveränderungs-Wähleinrichtung (24) repräsentiert;
eine Wiedergabegeschwindigkeits-Schalteinrichtung (40) zur Auswahl der Wiedergabegeschwindigkeit in Übereinstimmung mit der Auswahl eines Wertes, der bestimmt wird durch die Betätigung der Wiedergabegeschwindigkeits-Auswahleinrichtung (22A, 22B, 22C) oder eines Wertes basierend auf der von der Positionserfassungseinrichtung (25) ausgegebenen Drehpositionsinformation; und
eine Initialisierungseinrichtung (26, 46, 48), die ausgebildet ist, zur Auswahl der Geschwindigkeitsveränderungs-Wähleinrichtung (24) zur Initialisierung der von der Positionserfassungseinrichtung (25) ausgegebenen Drehposition zu einem Wert entsprechend einer Wiedergabegeschwindigkeit vor der Auswahl der Geschwindigkeitsveränderungs-Wähleinrichtung (24) und Ausgabe der initialisierten Drehpositionsinformation an die Wiedergabegeschwindigkeits Schalteinrichtung (40).

5. Steuerung gemäß einem der vorangehenden Ansprüche, aufweisend:
ein Geschwindigkeits-Veränderungsglied (5) zur Veränderung der Wiedergabegeschwindigkeit;
eine erste Positionserfassungseinrichtung (23) zur Erfassung der Position des Geschwindigkeits-Veränderungsgliedes;
eine Geschwindigkeitsveränderungs-Wähleinrichtung (24) zur Veränderung der Wiedergabegeschwindigkeit;
eine zweite Positionserfassungseinrichtung (25) zur Erfassung der Drehposition der Geschwindigkeitsveränderungs-Wähleinrichtung (24); und
eine Wiedergabegeschwindigkeits-Schalteinrichtung (40) zur Schaltung der Wiedergabegeschwindigkeit in Übereinstimmung mit den durch die erste Positionserfassungseinrichtung (22) und die zweite Positionserfassungseinrichtung (25) erzeugten Erfassungsergebnisse.

6. Steuersystem zur Steuerung von mehreren Vorrichtungen (2A, 3A; ...; 2N, 3N), wobei das Steuersystem mehrere Steuerungen (12A; ...; 12N) und eine Verbindungseinrichtung (14) zur Verbindung der Steuerung (12A; ...; 12N) aufweist, wobei:
jede Steuerung (12A; ...; 12N) mit wenigstens einer Vorrichtung (2A, 3A; ...; 2N, 3N) zur Steuerung der Vorrichtung verbunden ist;
jede Steuerung (12A; ...; 12N) selektiv in einem Master-Modus oder in einem Slave-Modus betreibbar ist, wobei wenigstens eine Steuerung zu jeder Zeit in dem Master-Modus betreibbar ist; und
die mit einer Steuerung (12A; ...; 12N) verbundene Vorrichtung, die in dem Slave-Modus arbeitet, durch die Steuerung (12A; ...; 12N) steuerbar ist, die in dem Master-Modus arbeitet;
**dadurch gekennzeichnet,** daß jede Steuerung aufweist:
eine Master-Modus-Anforderungseinrichtung (CP2);
eine Einrichtung (CP3) zum Ansprechen auf die Aktivierung der Master-Modus-Anforderungseinrichtung (CP2), um Master-Modus-Anforderungsdaten (REQ) an eine Einrichtung zur Verbindung der Steuerung (12A) zu den weiteren Steuerungen (12B; ...; 12N) auszugeben;
eine Einrichtung (CP5, CP6, CP7, CP9) zur Erfassung, ob Master-Modus-Bestätigungsdaten (POL), die angeben, ob eine weitere Steuerung bereits im Master-Modus ist, von der Verbindungseinrichtung (14) innerhalb einer festgelegten Zeitdauer empfangen werden, wobei die Erfassungseinrichtung (CP9) die Steuerung im Slave-Modus hält, wenn die Master-Modus-Bestätigungsdaten (POL) innerhalb der Zeitdauer empfangen werden und die Steuerung andernfalls in den Master-Modus schaltet (CP7).

## Revendications

1. Dispositif de commande pour commander au moins un appareil de reproduction (2A, 3A), dans lequel :
le dispositif de commande (12A) peut être raccordé à au moins un autre dispositif de commande pour définir un système de commande (10), lequel autre dispositif de commande (12B ; ... ; 12N) sert à commander au moins un autre appareil de reproduction (2B, 3B ; ... ; 2N, 3N)
le dispositif de commande (12A) et l'autre dispositif de commande (12B ; ... ; 12N) sont utilisables chacun sélectivement dans un mode maître ou dans un mode esclave ; et
le dispositif de commande (12A) est utilisable dans le mode maître pour commander l'appareil de reproduction (2A, 3A) et pour commander, via l'autre dispositif de commande (12B ; ... ; 12N), l'autre appareil de reproduction (2B, 3B ; ... ; 2N, 3N) et est utilisable dans ledit mode esclave pour permettre à l'appareil de reproduction (12A) d'être commandé par l'autre dispositif de commande (12B ; ... ; 12N) lorsque ledit autre dispositif de commande (12B ; ... ; 12N) est dans le mode maître ; caractérisé par
ledit dispositif de commande comprenant :
un moyen de demande de mode maître (CP2) ;
un moyen (CP3) pour répondre à l'activation du moyen de demande de mode maître (CP2) pour émettre des données de demande de mode maître (REQ) au moyen pour raccorder le dispositif de commande (12A) à l'autre dispositif de commande (12B ; ... ; 12N) ;
un moyen (CP5, CP6, CP7, CP9) pour détecter si des données d'accusé de réception de mode maître (POL) indicatrices d'un autre dispositif de commande déjà dans le mode maître sont reçues par le moyen de raccordement (14) dans une période prédéterminée, le moyen de détection maintenant (CP9) le dispositif de commande dans le mode esclave si les données d'accusé de réception de mode maître (POL) sont reçues pendant la période et sinon commute (CP7) le dispositif de commande en mode maître.

2. Dispositif de commande selon la revendication 1, comprenant :
un moyen (CP11) pour répondre à la réception des données de demande de mode maître du moyen de raccordement (14) lorsque ledit dispositif de commande est dans le mode maître pour émettre (CP13), dans une période prédéterminée, le signal d'accusé de réception de mode maître (POL) au moyen de raccordement (14).

3. Dispositif de commande selon la revendication 1 ou la revendication 2, dans lequel le dispositif de commande (12A) commande une vitesse de reproduction d'un premier appareil de reproduction (2) et une vitesse de reproduction d'un second appareil de reproduction (3) en fournissant un signal de commande de vitesse de reproduction (D_{COMD1}) au premier appareil de reproduction (2) et un signal de commande de vitesse de reproduction (D_{COMD2}) au second appareil de reproduction (3), le dispositif de commande permettant de réaliser une commutation de mode de commande sur la base des signaux de commande de vitesse de reproduction (D_{COMB1}, D_{COMB2}) et, pour des vitesses de reproduction dans un intervalle prédéterminé, d'ajuster les signaux de commande de vitesse de reproduction pour que les informations de temps renvoyées par le premier appareil de reproduction (D_{T1}) correspondent aux informations de temps renvoyées par le second appareil de reproduction (D_{T2}).

4. Dispositif de commande selon l'une quelconque des revendications précédentes, comprenant :
un moyen de sélection de vitesse de reproduction (22A, 22B, 22C) pour sélectionner une valeur pour une vitesse de reproduction ;
un bouton de vitesse variable (24) pour faire varier la vitesse de reproduction ;
un moyen de détection de position (25) pour fournir des informations de position rotationnelle représentant une position rotationnelle du bouton de vitesse variable (24) ;
un moyen de commutation de vitesse de reproduction (40) pour régler la vitesse de reproduction selon une opération de sélection à une valeur déterminée par le fonctionnement du moyen de sélection de vitesse de reproduction (22A, 22B, 22C) ou à une valeur sur la base des informations de position rotationnelle fournies par le moyen de détection de position (25), et
un moyen d'initialisation (26, 46, 48) utilisable lors d'une la sélection du bouton de vitesse variable pour initialiser les informations de position rotationnelle fournies par le moyen de détection de position (25) à une valeur correspondant à une vitesse de reproduction avant la sélection du bouton de vitesse variable (24), et pour fournir les informations de position rotationnelle initialisées au moyen de commutation de vitesse de reproduction (40).

5. Dispositif de commande selon l'une quelconque des revendications précédentes, comprenant :
un levier de vitesse variable (5) pour faire varier une vitesse de reproduction,
un premier moyen de détection de position (23) pour détecter la position du levier de vitesse variable,
un bouton de vitesse variable (24) pour faire varier la vitesse de reproduction,
un second moyen de détection de position (25) pour détecter une position rotationnelle du bouton de vitesse variable (24), et
un moyen de commutation de vitesse de reproduction (40) pour commuter ladite vitesse de reproduction selon des résultats de détection produits par le premier moyen de détection de position (23) et le second moyen de détection de position (25).

6. Système de commande pour commander une pluralité d'appareils (2A, 3A ; ... ; 2N, 3N), ledit système de commande comprenant une pluralité de dispositifs de commande (12A ; ... ; 12N) et un moyen de raccordement (14) pour interconnecter les dispositifs de commande (12A ; ... ; 12N) dans lequel :
chaque dispositif de commande (12A ; 12N) est raccordé à au moins un appareil (2A, 3A ; ... ; 2N, 3N) pour commander ledit appareil ;
chaque dispositif de commande (12A ; ... ; 12N) est sélectivement utilisable dans un mode maître ou dans un mode esclave avec au plus un dispositif de commande utilisable dans le mode maître à un moment quelconque ; et
un appareil raccordé à un dispositif de commande (12A ; ... 12N) fonctionnant dans le mode esclave est pouvant être commandé par ledit dispositif de commande (12A ; ... ; 12N) fonctionnant dans le mode maître ;
caractérisé par
chaque dit dispositif de commande comprenant :
un moyen de demande de mode maître (CP2) ;
un moyen (CP3) pour répondre à une activation du moyen de demande de mode maître (CP2) pour émettre des données de demande de mode maître (REQ) au moyen pour raccorder le dispositif de commande (12A) aux autres dispositifs de commande (12B ; ... ; 12N) ;
un moyen (CP5, CP6, CP7, CP9) pour détecter si des données d'accusé de réception de mode maître (POL) indicatrices d'un autre dispositif de commande déjà dans le mode maître sont reçues du moyen de raccordement (14) dans une période prédéterminée, le moyen de détection maintenant (CP9) le dispositif de commande dans le mode esclave si les données d'accusé de réception de mode maître (POL) sont reçues pendant la période et sinon commute (CP7) le dispositif de commande en mode maître.
